# EUROPEAN PATENT APPLICATION

(11) **EP 4 761 374 A1**
(43) Date of publication of application: **17.06.2026**
(21) Application number: 23948741.6
(22) Date of filing: 11.08.2023
(51) Int. Cl.: H04W 52/02

(54) **WAKE-UP METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); CUI, Shengjiang, Dongguan, Guangdong 523860 (CN)
(74) Representative: Novagraaf Technologies
(86) International application number: PCT/CN2023/112719
(87) International publication number: WO 2025/035306

(57) **Abstract**

The present disclosure relates to the field of zero power consumption, and discloses a wake-up method and apparatus, a device, and a medium. The method is executed by a network device. The method comprises: sending a first signal, the first signal carrying wake-up information for waking up at least one zero-power-consumption device, wherein a frequency domain resource corresponding to the wake-up information comprises at least two frequency domain unit groups, and each frequency domain unit group comprises at least one frequency domain unit. The sent first signal transmits the wake-up information by means of the at least two frequency domain unit groups, and the first signal carrying the wake-up information is distributed uniformly in frequency domain, thereby avoiding high peak power and interference caused by excessively concentrated energy of the first signal, helping to improve the robustness of the first signal, and helping to improve the transmission quality and receiving quality of the wake-up information carried by the first signal.

## Description

### TECHNICAL FIELD

The present disclosure relates to the field of zero-power, and in particular, relates to a wake-up method and apparatus, a device, and a storage medium.

### RELATED ART

Wake-up signals received by a zero-power device typically employ simple waveforms, enabling low-power reception and detection.

However, such simple waveforms may easily lead to excessive concentration of energy of the wake-up signals and result in high selectivity to frequencies, which affects the robustness and transmission quality of the wake-up signals.

### SUMMARY

The present disclosure provides a wake-up method and apparatus, a device, and a medium. The technical solutions include at least following content.

According to some embodiments of the present disclosure, a wake-up method is provided. The method is performed by a network device, and includes:
transmitting a first signal, wherein the first signal carries wake-up information for waking up at least one zero-power device;
wherein a frequency-domain resource corresponding to the wake-up information includes at least two frequency-domain unit groups, each of the at least two frequency-domain unit groups including at least one frequency-domain unit.

According to some embodiments of the present disclosure, a wake-up method is provided. The method is performed by a zero-power device, and includes:
receiving a first signal, wherein the first signal carries wake-up information for waking up at least one zero-power device;
wherein a frequency-domain resource corresponding to the wake-up information includes at least two frequency-domain unit groups, each of the at least two frequency-domain unit groups including at least one frequency-domain unit.

According to some embodiments of the present disclosure, a wake-up apparatus is provided. The apparatus includes:
a first transmitting module, configured to transmit a first signal, wherein the first signal carries wake-up information for waking up at least one zero-power device;
wherein a frequency-domain resource corresponding to the wake-up information includes at least two frequency-domain unit groups, each of the at least two frequency-domain unit groups including at least one frequency-domain unit.

According to some embodiments of the present disclosure, a wake-up apparatus is provided. The apparatus includes:
a second receiving module, configured to receive a first signal, wherein the first signal carries wake-up information for waking up at least one zero-power device;
wherein a frequency-domain resource corresponding to the wake-up information includes at least two frequency-domain unit groups, each of the at least two frequency-domain unit groups including at least one frequency-domain unit.

According to some embodiments of the present disclosure, a network device is provided. The network device includes:
a processor;
a transmitter communicably connected to the processor; and
a memory, configured to store one or more instructions executable by the processor;
wherein the transmitter is configured to transmit a first signal, wherein the first signal carries wake-up information for waking up at least one zero-power device; wherein a frequency-domain resource corresponding to the wake-up information includes at least two frequency-domain unit groups, each of the at least two frequency-domain unit groups including at least one frequency-domain unit.

According to some the embodiments of the present disclosure, a zero-power device is provided. The zero-power device includes a first receiver.

The first receiver is configured to receive a first signal, wherein the first signal carries wake-up information for waking up at least one zero-power device;
wherein a frequency-domain resource corresponding to the wake-up information includes at least two frequency-domain unit groups, each of the at least two frequency-domain unit groups including at least one frequency-domain unit.

According to some embodiments of the present disclosure, a computer-readable storage medium is provided. The computer-readable storage medium stores one or more executable instructions, wherein the one or more executable instructions, when loaded and executed by a processor, cause the processor to perform the wake-up method as described above.

According to some embodiments of the present disclosure, a computer program product is provided. The computer program product includes one or more computer instructions stored in a computer-readable storage medium, wherein the one or more computer instructions, when read by a processor of a computer device from the computer-readable storage medium and executed by the processor, cause the computer device to perform the wake-up method as described above.

According to some embodiments of the present disclosure, a chip is provided. The chip includes programmable logic circuitry or one or more programs, wherein the chip, when running, is configured to perform the wake-up method as described above.

According to some embodiments of the present disclosure, a computer program is provided. The computer program includes one or more computer instructions, wherein the one or more computer instructions, when executed by a processor of a computer device, cause the computer device to perform the wake-up method as described above.

The technical solutions according to the embodiments of the present disclosure achieve the following beneficial effects:

The first signal carries wake-up information and is transmitted via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and reception quality of the wake-up information carried by the first signal.

### BRIEF DESCRIPTION OF DRAWINGS

For clear descriptions of the technical solutions according to the embodiments of the present disclosure, the drawings required for describing the embodiments are briefly described hereinafter. It is obvious that the drawings in the following descriptions are merely for illustrating some embodiments of the present disclosure, and those of ordinary skill in the art may derive other drawings based on these drawings without any creative efforts.
FIG. 1 is a schematic diagram of a zero-power communication system according to some embodiments of the present disclosure;
FIG. 2 is a schematic diagram of a discontinuous reception (DRX) state in the related art;
FIG. 3 is a schematic diagram of a dormant bandwidth part (BWP) or a dormant carrier in the related art;
FIG. 4 is a schematic diagram of a receiving system of a terminal device according to some embodiments of the present disclosure;
FIG. 5 is a schematic flowchart of a wake-up method according to some embodiments of the present disclosure;
FIG. 6 is a schematic flowchart of a wake-up method according to some embodiments of the present disclosure;
FIG. 7 is a schematic flowchart of a wake-up method according to some embodiments of the present disclosure;
FIG. 8 is a schematic flowchart of a wake-up method according to some embodiments of the present disclosure;
FIG. 9 is a schematic flowchart of a wake-up method according to some embodiments of the present disclosure;
FIG. 10 is a schematic diagram of generating a first signal according to some embodiments of the present disclosure;
FIG. 11 is a schematic diagram of time-frequency resources corresponding to a first signal according to some embodiments of the present disclosure;
FIG. 12 is a schematic flowchart of a wake-up method according to some embodiments of the present disclosure;
FIG. 13 is a schematic diagram of generating a first signal according to some embodiments of the present disclosure;
FIG. 14 is a schematic diagram of time-frequency resources corresponding to a first signal according to some embodiments of the present disclosure;
FIG. 15 is a structural block diagram of a wake-up apparatus according to some embodiments of the present disclosure;
FIG. 16 is a structural block diagram of a wake-up apparatus according to some embodiments of the present disclosure;
FIG. 17 is a schematic structural diagram of a network device according to some embodiments of the present disclosure; and
FIG. 18 is a schematic structural diagram of a zero-power device according to some embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same reference numerals in different drawings represent the same or similar elements, unless otherwise indicated. The embodiments described in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should be understood that the term "and/or" as used herein refers to and includes any or all possible combinations of one or more of associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "in a case where" as used herein may be interpreted as "when," "upon," or "in response to determining" depending on the context.

First, communication technologies involved in the embodiments of the present disclosure are introduced hereinafter.

### 1. Overview of Zero-Power Communication

The zero-power communication may be implemented based on a zero-power Internet of things (IoT). The zero-power IoT may also be referred to as an ambient power enabled IoT (abbreviated as "ambient IoT/A-IoT") or a passive IoT.

A terminal device adopting zero-power communication technology may be referred to as a zero-power device or an ambient IoT/A-IoT device. The ambient IoT/A-IoT device uses various ambient energies, such as radio-frequency (RF) energy, light energy, solar energy, thermal energy, mechanical energy, or the like, to drive operations of the ambient IoT/A-IoT device. The ambient IoT/A-IoT device may have no energy storage capability, or may have very limited energy storage capability. For example, an ambient IoT/A-IoT device uses a capacitor with a capacity of several tens of microfarads (µF). Compared with other IoT devices, ambient IoT/A-IoT devices have many advantages such as no need for conventional batteries, no maintenance, small size, low complexity, low cost, and long service life.

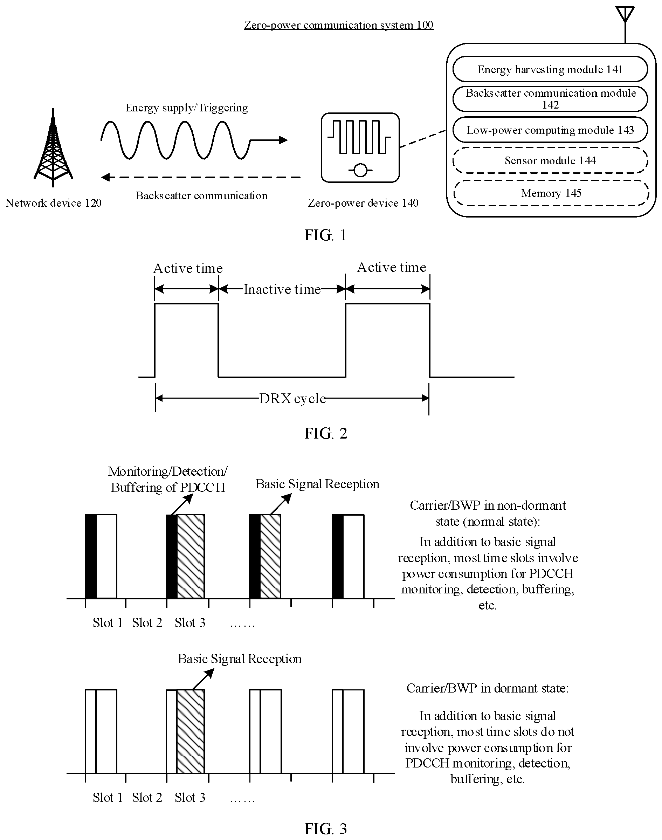

FIG. 1, as illustrated, is a schematic diagram of a zero-power communication system 100 according to some embodiments of the present disclosure. The zero-power communication system 100 includes a network device 120 and a zero-power device 140.

The network device 120 is configured to transmit wireless energy supply signals and downlink communication signals to the zero-power device 140, and receive backscatter signals from the zero-power device 140. The zero-power device 140 includes an energy harvesting module 141, a backscatter communication module 142, and a low-power computing module 143. The energy harvesting module 141 is configured to harvest energy carried by radio waves in space to drive the low-power computing module 143 of the zero-power device 140 and to enable the backscatter communication module 142 to implement backscatter communication. The zero-power device 140, upon harvesting energy, may receive control signals from the network device 120 and transmit data to the network device 120 in a backscatter manner based on the control signals. The transmitted data may be data stored in the zero-power device 140 (such as an identity identifier or pre-written information, e.g., a production date, a brand, a manufacturer of a product).

The zero-power device 140 may further include a sensor module 144 and a memory 145. The sensor module 144 may include various types of sensors. The zero-power device 140 may report data captured by various sensors based on a zero-power mechanism. The memory 145 is configured to store some basic information (such as item identifiers) or acquire sensing data such as ambient temperature and ambient humidity.

Since the zero-power device 140 does not require a battery, and the low-power computing module 143 is configured to implement simple operations such as signal demodulation, decoding/encoding, and modulation, the zero-power module merely requires an extremely simple hardware design, such that the zero-power device 140 is produced at a low cost and has a compact size.

The network device 120 includes, but is not limited to: a cellular network device, such as a 5^{th} generation (5G) or 6^{th} generation (6G) network device and a 5G/6G base station device; and a wireless fidelity (Wi-Fi) or wireless local area network (WLAN) network device, such as an access point (AP), a router, a mobile AP, or the like. The mobile AP is, for example, a mobile phone.

The zero-power device 140 includes, but is not limited to: a handheld device, a wearable device, a vehicle-mounted device, an IoT device, and the like. The zero-power device 140 may be at least one of: a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

The technical solutions according to some embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a Wi-Fi system, a 5G system, a cellular IoT system, and a cellular passive IoT system. The technical solutions are also applicable to an evolution system subsequent to the 5G NR system, as well as 6G and subsequent evolution systems.

It should be understood that in some embodiments of the present disclosure, "5G" may also be referred to as "5G NR" or "NR."

It should be understood that in the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In the embodiments of the present disclosure, a "predefined" operation may be performed by pre-storing corresponding codes or tables in a communication device (such as a zero-power device and a network device), or may be performed by other means that may be used to indicate relevant information. The present disclosure does not impose any restrictions on specific methods for performing the predefined operation. For example, the predefined operation may be defined or specified in a protocol.

### 2. DRX State

The DRX transmission mechanism may be used for energy saving of terminal devices. The main principle of this mechanism is to realize discontinuous reception of the terminal device in a time domain via semi-static configuration. In a case where no data transmission is required, the terminal device may stop monitoring a physical downlink control channel (PDCCH) to reduce power consumption. In this case, PDCCH blind detection is stopped.

The DRX may be achieved by configuring a DRX cycle for a terminal device in a radio resource control (RRC) connected (RRC_Connected) state. As illustrated in FIG. 2, a DRX cycle includes an active time period and an inactive time period. During the active time period, the terminal device monitors and receives a PDCCH; and during the inactive time period, the terminal device does not monitor or receive the PDCCH to reduce power consumption. The active time period occurs upon activation of the DRX, or when an inactivity timer is running, or during a period when the inactive timer has not yet expired.

### 3. Dormant BWP or Dormant Carrier

A network device may configure a particular BWP, a plurality of particular BWPs, a particular carrier, or a plurality of particular carriers into a dormant state. The network device may adjust the BWP or the carrier in the dormant state based on the current system throughput, service requirements, or the like. A BWP in a dormant state may be referred to as a dormant BWP for short. A carrier in a dormant state may be referred to as a dormant carrier for short.

Exemplarily, the network device enables the terminal device to operate on a dormant BWP or a non-dormant BWP by indicating switching of the BWP.

In a case where the terminal device operates on a BWP or a carrier in a dormant state, the terminal device is not required to monitor a PDCCH or reduces the monitoring of the PDCCH. In addition, the terminal device may only maintain reception of some basic signals, such as signals for channel measurement, signals for uplink and downlink synchronization, signals for frequency calibration, or the like.

As illustrated in FIG. 3, power consumption may be significantly reduced in a case where the terminal device operates on a dormant BWP or a dormant carrier.

### 4. Terminal Energy Saving Based on Wake-Up Receiver (WUR)

The WUR has characteristics of extremely low cost, extremely low complexity, and extremely low power consumption. The WUR receives a wake-up signal (WUS) primarily via envelope detection. Generally, the power consumption of a traditional receiver is greater than 100 milliwatts. However, the power consumption of a WUR may be lower than 1 milliwatt.

The WUR is not required to be activated or deactivated like the traditional receiver of the terminal device to save power, but is activatable by the WUS at any time and to receive wake-up information. The WUS received by the WUR usually adopts a relatively simple modulation method. For example, the WUS is an envelope signal formed by amplitude shift keying (ASK) modulation.

The demodulation of the envelope signal may be achieved based on driving of a low-power circuit by induced current that is generated by electro-magnetic induction, or based on driving of a low-power circuit by energy that is provided by an RF signal. Therefore, the WUR may be passive or semi-passive. The demodulation of the envelope signal may also be achieved based on a built-in battery of the WUR or a power supply system of the WUR. Therefore, the WUR may also be active. Regardless of the power supply method, the WUR greatly reduces power consumption compared with the traditional receiver. The WUR may be combined with the traditional receiver of the terminal device as an additional module of the traditional receiver. Alternatively, the WUR may be a separate module of the terminal device, such as a wake-up function module.

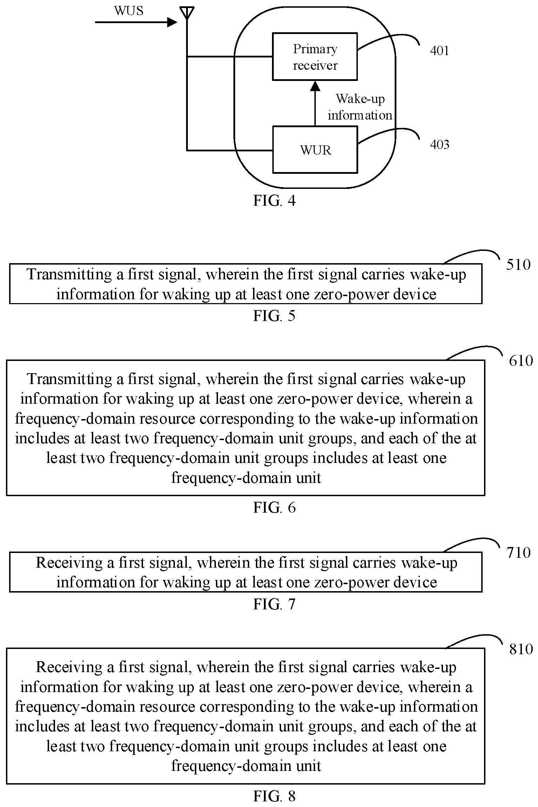

FIG. 4, as illustrated, is a structural block diagram of a receiver system of a terminal device. The receiver system includes a primary receiver 401 and a WUR 403. The WUR 403, upon receiving a WUS, may transmit wake-up information to the primary receiver 401 to wake up the primary receiver 401 in a case where the primary receiver 401 is required to be activated for operation. In a case where the primary receiver 401 is not required to be activated, the primary receiver 401 may remain in an off state to save power.

Due to the characteristics of low-power reception and detection, the WUS received by the WUR typically employs a simple waveform for transmission. However, in a case where such a WUS with the simple waveform is transmitted via a single carrier, signal energy is too concentrated at a single frequency point. Consequently, robustness of the signal is poor and selectivity to frequencies for the signal is high, which is not conducive to the transmission quality and transmission efficiency of the signal.

In view of the above problems, the present disclosure provides a wake-up method, enabling a signal carrying wake-up information evenly distributed in a frequency domain to avoid excessive concentration of signal energy.

FIG. 5 is a schematic flowchart of a wake-up method according to some embodiments of the present disclosure. The method is performed by a network device, and includes the following steps.

**In step 510,** the network device transmits a first signal, wherein the first signal carries wake-up information for waking up at least one zero-power device.

A frequency-domain resource corresponding to the wake-up information includes at least two frequency-domain unit groups, wherein each of the at least two frequency-domain unit groups includes at least one frequency-domain unit.

The frequency-domain unit includes at least one of: a carrier, a BWP, a sub-band, a subchannel, a physical resource block (PRB), a subcarrier, or an element based on another frequency-domain unit.

In some embodiments, the wake-up information carried by the first signal is used to wake up a zero-power device. In some embodiments, the wake-up information carried by the first signal includes one or more parts, wherein the one or more parts are used to wake up a zero-power device.

In some embodiments, the wake-up information carried by the first signal is used to wake up a plurality of zero-power devices. In some embodiments, the first signal carries a plurality of pieces of wake-up information, wherein the plurality of pieces of wake-up information are in one-to-one correspondence with the plurality of zero-power devices.

In some embodiments, the at least two frequency-domain unit groups are located at different frequency-domain positions, that is, the at least two frequency-domain unit groups respectively include different frequency-domain units. In some embodiments, the at least two frequency-domain unit groups are adjacent or non-adjacent.

Exemplarily, in a case where two frequency-domain unit groups are non-adjacent, another frequency-domain resource is present between the two frequency-domain unit groups, a guard interval (GI) is present between the two frequency-domain unit groups, or another frequency-domain resource and a GI are present between the two frequency-domain unit groups. The another frequency-domain resource refers to a frequency-domain resource other than the two frequency-domain unit groups and the GI.

Exemplarily, in a case where more than two frequency-domain unit groups are non-adjacent, another frequency-domain resource is present between at least two of the frequency-domain unit groups, a GI is present between at least two of the frequency-domain unit groups, or another frequency-domain resource and a GI are present between at least two of the frequency-domain unit groups. The another frequency-domain resource refers to a frequency-domain resource other than the more than two frequency-domain unit groups and the GI.

In some embodiments, each of the at least two frequency-domain unit groups includes a frequency-domain unit or a plurality of frequency-domain units. In some embodiments, the plurality of frequency-domain units are contiguous or non-contiguous.

In view of the above, in the method according to the embodiments of the present disclosure, the first signal carries wake-up information and is transmitted by the network device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and the reception quality of the wake-up information carried by the first signal.

In some embodiments, step 510 may also be implemented as step 610, as illustrated in FIG. 6.

FIG. 6 is a schematic flowchart of a wake-up method according to some embodiments of the present disclosure. The method is performed by a network device, and includes the following steps.

**In step 610,** the network device transmits a first signal, wherein the first signal carries wake-up information for waking up at least one zero-power device. A frequency-domain resource corresponding to the wake-up information includes at least two frequency-domain unit groups, wherein each of the at least two frequency-domain unit groups includes at least one frequency-domain unit.

In some embodiments, the wake-up information carried by the first signal is used to wake up a zero-power device. In some embodiments, the wake-up information carried by the first signal includes one or more parts, wherein the one or more parts are used to wake up a zero-power device.

In some embodiments, the wake-up information carried by the first signal is used to wake up a plurality of zero-power devices. In some embodiments, the first signal carries a plurality of pieces of wake-up information, wherein the plurality of pieces of wake-up information are in one-to-one correspondence with the plurality of zero-power device s.

In some embodiments, the at least two frequency-domain unit groups are located at different frequency-domain positions, that is, the at least two frequency-domain unit groups respectively include different frequency-domain units. In some embodiments, the at least two frequency-domain unit groups are adjacent or non-adjacent.

In some embodiments, parameters of the wake-up information associated with different frequency-domain unit groups are the same; or parameters of the wake-up information associated with different frequency-domain unit groups are different.

In some embodiments, each of the at least two frequency-domain unit groups includes a frequency-domain unit or a plurality of frequency-domain units. In some embodiments, the plurality of frequency-domain units are contiguous or non-contiguous.

In some embodiments, the parameters of the wake-up information include at least one of:
- an identifier of a zero-power device corresponding to the wake-up information;
- an index of a zero-power device corresponding to the wake-up information;
- a channel identifier corresponding to the wake-up information;
- a channel index corresponding to the wake-up information; or
- a signal segment corresponding to the wake-up information.

The zero-power device corresponding to the wake-up information may also be referred to as the zero-power device associated with the wake-up information, which refers to the zero-power device to be woken up by the wake-up information.

The channel identifier corresponding to the wake-up information refers to an identifier of a channel for carrying the wake-up information, or an identifier of the channel for transmitting the wake-up information. Similarly, the channel index corresponding to the wake-up information refers to an index of a channel for carrying the wake-up information, or an index of a channel for transmitting the wake-up information.

The signal segment corresponding to the wake-up information refers to the signal segment to which the wake-up information belongs in the first signal.

In some embodiments, the first signal includes a time-domain signal generated by performing a first transformation on a frequency-domain signal, wherein the first transformation refers to a transformation of the signal from a frequency domain to a time domain.

In some embodiments, the first transformation includes one of: an inverse Fourier transform (IFT), an inverse fast Fourier transform (IFFT), an inverse Laplace transform, an inverse z-transform, another transformation equivalent to the IFT, another transformation equivalent to the IFFT, another transformation equivalent to the inverse Laplace transform, or another transformation equivalent to the inverse z-transform. Herein, "equivalent" means that two transformation methods achieve the same effect, two transformation methods have the same principle, or two transformation methods have the same calculation process.

In some embodiments, the frequency-domain signal includes at least two frequency-domain signal groups corresponding to the at least two frequency-domain unit groups. Alternatively, the frequency-domain signal includes a multiplexed signal of the at least two frequency-domain signal groups and another frequency-domain signal.

Herein, the another frequency-domain signal refers to a frequency-domain signal other than the at least two frequency-domain signal groups.

Exemplarily, the another frequency-domain signal is a signal with an orthogonal frequency-division multiplexing (OFDM) waveform, such as a measurement signal, a cell broadcast signal, a multicast signal, or the like.

In some embodiments, the at least two frequency-domain unit groups are in one-to-one correspondence with the at least two frequency-domain signal groups.

In some embodiments, an i^{th} frequency-domain signal group of the at least two frequency-domain signal groups is generated by performing at least one second transformation on wake-up information corresponding to an i^{th} frequency-domain unit group of the at least two frequency-domain unit groups.

Herein, the second transformation refers to a transformation of the signal from a time domain to a frequency domain.

In some embodiments, the second transformation includes one of: a Fourier transform (FT), a fast FT (FFT), a discrete FT (DFT), a Laplace transform, a z-transform, another transformation equivalent to the FT, another transformation equivalent to the FFT, another transformation equivalent to the Laplace transform, or another transformation equivalent to the z-transform. Herein, "equivalent" means that two transformation methods achieve the same effect, two transformation methods have the same principle, or two transformation methods have the same calculation process.

In some embodiments, the i^{th} frequency-domain signal group of the at least two frequency-domain signal groups includes a frequency-domain sequence determined based on the wake-up information corresponding to the i^{th} frequency-domain unit group of the at least two frequency-domain unit groups. It may also be understood that the i^{th} frequency-domain signal group is composed of a frequency-domain sequence, wherein the frequency-domain sequence is associated with the wake-up information corresponding to the i^{th} frequency-domain unit group.

In some embodiments, the at least one zero-power device is located in the same cell or different cells. It may also be understood that the first signal is used to wake up at least one zero-power device within one cell, or the first signal is used to wake up zero-power device s within a plurality of cells.

In some embodiments, the first signal is a cell-level signal. It may also be understood that first signals are in one-to-one correspondence with cells, and different cells correspond to different first signals.

In some embodiments, the wake-up information is cell-level information. It may also be understood that a plurality of pieces of wake-up information are in one-to-one correspondence with cells, and different cells correspond to different pieces of wake-up information.

In some embodiments, the wake-up information is terminal-level information. It may also be understood that a plurality of pieces of wake-up information are in one-to-one correspondence with terminal devices, and different terminal devices correspond to different pieces of wake-up information.

In view of the above, in the method according to the embodiments of the present disclosure, the first signal carries wake-up information and is transmitted by the network device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and the reception quality of the wake-up information carried by the first signal. In addition, a transformation method for the first signal is designed. By separately processing the wake-up information corresponding to each of the at least two frequency-domain unit groups, such as separately performing the second transformation or separately generating the frequency-domain sequence for the wake-up information corresponding to each of the at least two frequency-domain unit groups, the energy of the finally transmitted first signal is further evenly distributed, and the robustness of the first signal is further improved.

FIG. 7 is a schematic flowchart of a wake-up method according to some embodiments of the present disclosure. The method is performed by a zero-power device, and includes the following steps.

**In step 710,** the zero-power device receives a first signal, wherein the first signal carries wake-up information for waking up at least one zero-power device.

A frequency-domain resource corresponding to the wake-up information includes at least two frequency-domain unit groups, wherein each of the at least two frequency-domain unit groups includes at least one frequency-domain unit.

The frequency-domain unit includes at least one of: a carrier, a BWP, a sub-band, a subchannel, a PRB, a subcarrier, or an element based on another frequency-domain unit.

In some embodiments, the wake-up information carried by the first signal is used to wake up a zero-power device. In some embodiments, the wake-up information carried by the first signal includes one or more parts, wherein the one or more parts are used to wake up a zero-power device.

In some embodiments, the wake-up information carried by the first signal is used to wake up a plurality of zero-power devices. In some embodiments, the first signal carries a plurality of pieces of wake-up information, and the plurality of pieces of wake-up information are in one-to-one correspondence with the plurality of zero-power devices.

In some embodiments, the at least two frequency-domain unit groups are located at different frequency-domain positions, that is, the at least two frequency-domain unit groups respectively include different frequency-domain units. In some embodiments, the at least two frequency-domain unit groups are adjacent or non-adjacent.

Exemplarily, in a case where two frequency-domain unit groups are non-adjacent, another frequency-domain resource is present between the two frequency-domain unit groups, a GI is present between the two frequency-domain unit groups, or another frequency-domain resource and a GI are present between the two frequency-domain unit groups. The another frequency-domain resource refers to a frequency-domain resource other than the two frequency-domain unit groups and the GI.

Exemplarily, in a case where more than two frequency-domain unit groups are non-adjacent, another frequency-domain resource is present between at least two of the frequency-domain unit groups, a GI is present between at least two of the frequency-domain unit groups, or another frequency-domain resource and a GI are present between at least two of the frequency-domain unit groups. The another frequency-domain resource refers to a frequency-domain resource other than the more than two frequency-domain unit groups and the GI.

In some embodiments, each of the at least two frequency-domain unit groups includes a frequency-domain unit or a plurality of frequency-domain units. In some embodiments, the plurality of frequency-domain units are contiguous or non-contiguous.

In view of the above, in the method according to the embodiments of the present disclosure, the first signal carries wake-up information and is received by the zero-power device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and the reception quality of the wake-up information carried by the first signal.

In some embodiments, step 710 may also be implemented as step 810, as illustrated in FIG. 8.

FIG. 8 is a schematic flowchart of a wake-up method according to some embodiments of the present disclosure. The method is performed by a zero-power device, and includes the following steps.

**In step 810,** the zero-power device receives a first signal, wherein the first signal carries wake-up information for waking up at least one zero-power device. A frequency-domain resource corresponding to the wake-up information includes at least two frequency-domain unit groups, wherein each of the at least two frequency-domain unit groups includes at least one frequency-domain unit.

In some embodiments, the wake-up information carried by the first signal is used to wake up a zero-power device. In some embodiments, the wake-up information carried by the first signal includes one or more parts, wherein the one or more parts are used to wake up a zero-power device.

In some embodiments, the wake-up information carried by the first signal is used to wake up a plurality of zero-power devices. In some embodiments, the first signal carries a plurality of pieces of wake-up information, and the plurality of pieces of wake-up information are in one-to-one correspondence with the plurality of zero-power devices.

In some embodiments, the at least two frequency-domain unit groups are located at different frequency-domain positions, that is, the at least two frequency-domain unit groups respectively include different frequency-domain units. In some embodiments, the at least two frequency-domain unit groups are adjacent or non-adjacent.

In some embodiments, parameters of the wake-up information associated with different frequency-domain unit groups are the same; or parameters of the wake-up information associated with different frequency-domain unit groups are different.

In some embodiments, each of the at least two frequency-domain unit groups includes a frequency-domain unit or a plurality of frequency-domain units. In some embodiments, the plurality of frequency-domain units are contiguous or non-contiguous.

In some embodiments, the parameters of the wake-up information include at least one of: an identifier of a zero-power device corresponding to the wake-up information; an index of a zero-power device corresponding to the wake-up information; a channel identifier corresponding to the wake-up information; a channel index corresponding to the wake-up information; or a signal segment corresponding to the wake-up information.

Herein, the zero-power device corresponding to the wake-up information may also be referred to as the zero-power device associated with the wake-up information, which refers to the zero-power device to be woken up by the wake-up information.

The channel identifier corresponding to the wake-up information refers to an identifier of a channel for carrying the wake-up information, or an identifier of the channel for transmitting the wake-up information. Similarly, the channel index corresponding to the wake-up information refers to an index of a channel for carrying the wake-up information, or an index of a channel for transmitting the wake-up information.

The signal segment corresponding to the wake-up information refers to the signal segment to which the wake-up information belongs in the first signal.

In some embodiments, the frequency-domain resource corresponding to the wake-up information is determined based on at least one second transformation, wherein the second transformation refers to a transformation of the signal from a time domain to a frequency domain. Alternatively, the frequency-domain resource corresponding to the wake-up information is determined based on a frequency-domain sequence.

In some embodiments, the second transformation includes one of: an FT, an FFT, a DFT, a Laplace transform, a z-transform, another transformation equivalent to the FT, another transformation equivalent to the FFT, another transformation equivalent to the Laplace transform, or another transformation equivalent to the z-transform. Herein, "equivalent" means that two transformation methods achieve the same effect, two transformation methods have the same principle, or two transformation methods have the same calculation process.

In some embodiments, the first signal includes a time-domain signal generated by performing a first transformation on a frequency-domain signal, wherein the first transformation refers to a transformation of the signal from a frequency domain to a time domain.

In some embodiments, the first transformation includes one of: an IFT, an IFFT, an inverse Laplace transform, an inverse z-transform, another transformation equivalent to the IFT, another transformation equivalent to the IFFT, another transformation equivalent to the inverse Laplace transform, or another transformation equivalent to the inverse z-transform. Herein, "equivalent" means that two transformation methods achieve the same effect, two transformation methods have the same principle, or two transformation methods have the same calculation process.

In some embodiments, the frequency-domain signal includes at least two frequency-domain signal groups corresponding to the at least two frequency-domain unit groups. Alternatively, the frequency-domain signal includes a multiplexed signal of the at least two frequency-domain signal groups and another frequency-domain signal. Herein, the another frequency-domain signal refers to a frequency-domain signal other than the at least two frequency-domain signal groups.

In some embodiments, the at least one zero-power device is located in the same cell or different cells. It may also be understood that the first signal is used to wake up at least one zero-power device within one cell, or the first signal is used to wake up zero-power device s within a plurality of cells.

In some embodiments, the first signal is a cell-level signal. It may also be understood that first signals are in one-to-one correspondence with cells, and different cells correspond to different first signals.

In some embodiments, the wake-up information is cell-level information. It may also be understood that a plurality of pieces of wake-up information are in one-to-one correspondence with cells, and different cells correspond to different pieces of wake-up information.

In some embodiments, the wake-up information is terminal-level information. It may also be understood that a plurality of pieces of wake-up information are in one-to-one correspondence with terminal devices, and different terminal devices correspond to different pieces of wake-up information.

In view of the above, in the method according to the embodiments of the present disclosure, the first signal carries wake-up information and is received by the zero-power device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and reception quality of the wake-up information carried by the first signal. In addition, the frequency-domain resources corresponding to the wake-up information are determined separately, which further achieves even distribution of the energy of the first signal and further improves the robustness of the first signal.

The design and the use of the first signal are described hereinafter schematically by using an example where the parameters of the wake-up information associated with different frequency-domain unit groups are the same.

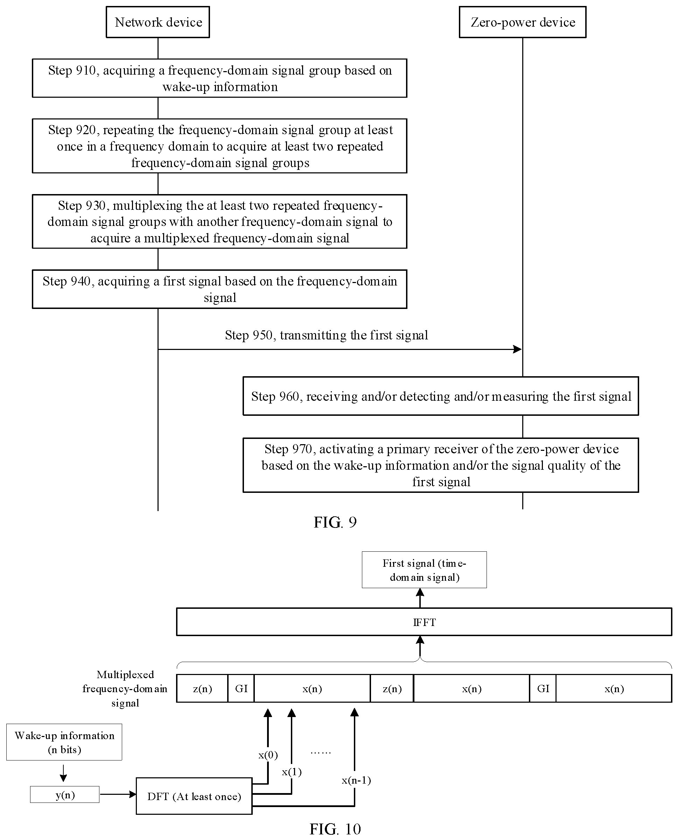

FIG. 9 is a schematic flowchart of a wake-up method according to some embodiments of the present disclosure. The method is performed by a zero-power device and a network device, and includes the following steps.

**In step 910,** the network device acquires a frequency-domain signal group based on wake-up information.

The wake-up information is used to wake up a zero-power device or a plurality of zero-power devices.

In some embodiments, the network device performs at least one second transformation on the wake-up information to acquire the frequency-domain signal group.

In some embodiments, the wake-up information corresponds to an information bit group, wherein the information bit group includes n bits. At least one second transformation is performed on the information bit group to map the wake-up information to n frequency-domain units in a frequency domain, wherein n is an integer greater than or equal to 1.

Exemplarily, as illustrated in FIG. 10, the wake-up information corresponds to n bits, and an information bit group of the wake-up information may be represented by y(n). In a case where the second transformation is a DFT transformation, a frequency-domain signal group x(n) is acquired in a frequency domain by performing at least one DFT on y(n), wherein x(i) corresponds to y(i), i is equal to 0, 1, 2... n-1. Exemplarily, a value of n is one of {1, 2, 4, 6, 8, 12, 16}, or n is another integer greater than 1.

In some embodiments, the wake-up information is represented by a group of frequency-domain sequences. The frequency-domain signal group corresponding to the wake-up information includes a group of frequency-domain sequences, which may also be understood as that the frequency-domain signal group corresponding to the wake-up information is represented by a group of frequency-domain sequences. In this case, the network device is not required to perform the second transformation in the process of acquiring the frequency-domain signal group based on the wake-up information.

In some embodiments, prior to step 910, the network device further performs time-domain oversampling on the wake-up information. Exemplarily, original wake-up information, which corresponds to n/4 bits, is oversampled by a factor of 4 by repeating every four consecutive bits to form an information bit group of n bits.

**In step 920,** the network device repeats the frequency-domain signal group at least once in a frequency domain to acquire at least two repeated frequency-domain signal groups.

Frequency-domain positions of respective frequency-domain signal groups x(n) are different. It may also be understood that at least two repeated frequency-domain signal groups x(n) respectively correspond to different frequency-domain unit groups, and each of the frequency-domain unit groups includes at least one frequency-domain unit. In some embodiments, the at least two repeated frequency-domain signal groups x(n) are adjacent or non-adjacent.

The frequency-domain signals corresponding to different frequency-domain unit groups are the same, which may also be understood as that parameters of the wake-up information associated with different frequency-domain unit groups are the same. The parameter of the wake-up information is, for example, an identifier of a zero-power device, a channel identifier, or the like.

Exemplarily, as illustrated in FIG. 10, at least two repeated frequency-domain signal groups x(n) are present in the frequency domain. A frequency-domain unit group corresponding to each of the at least two frequency-domain signal groups x(n) includes at least two contiguous frequency-domain units. In a case where the frequency-domain unit is a subcarrier, each subcarrier group corresponding to each of the at least two frequency-domain signal groups x(n) includes at least two contiguous subcarriers.

**In step 930,** the network device multiplexes the at least two repeated frequency-domain signal groups with another frequency-domain signal to acquire a multiplexed frequency-domain signal.

The at least two repeated frequency-domain signal groups x(n) and another frequency-domain signal z(n) form a multiplexed frequency-domain signal; the at least two repeated frequency-domain signal groups x(n) and a GI form a multiplexed frequency-domain signal; or the at least two repeated frequency-domain signal groups x(n), another frequency-domain signal z(n), and a GI form a multiplexed frequency-domain signal.

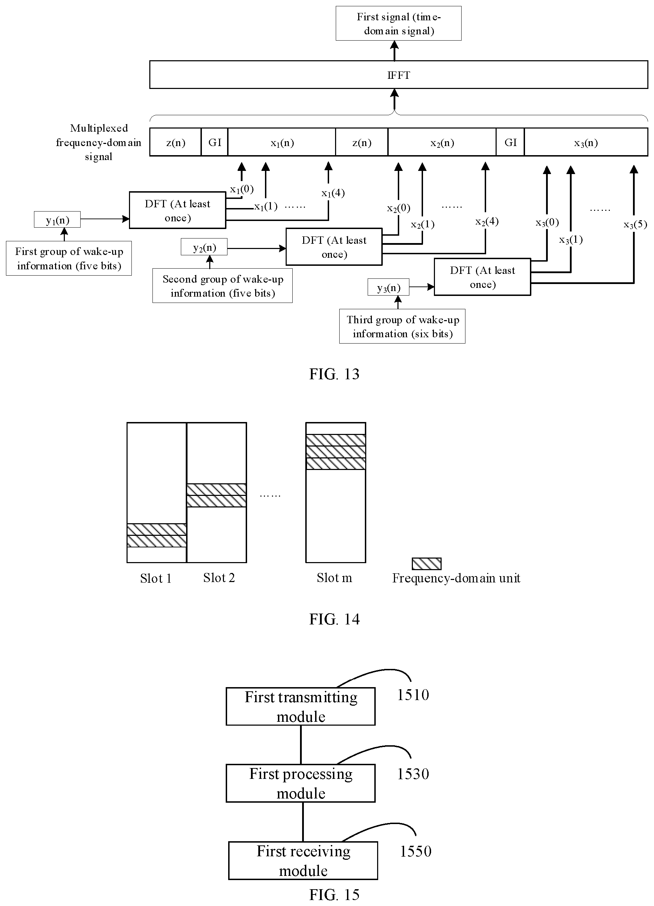

Exemplarily, as illustrated in FIG. 13, at least two repeated frequency-domain signal groups x(n) are multiplexed with another frequency-domain signal z(n), and a GI is present between the at least two repeated frequency-domain signal groups x(n). Therefore, the at least two repeated frequency-domain signal groups x(n) are non-adjacent.

In some embodiments, the another frequency-domain signal z(n) is a signal with OFDM waveforms, such as a cell broadcast signal, a measurement signal, a system message, or the like.

It should be noted that step 930 is optional. In a case where step 930 is performed to multiplex the at least two frequency-domain signal groups with another frequency-domain signal, the utilization efficiency of spectrum resources may be improved.

**In step 940,** the network device acquires a first signal based on the frequency-domain signal.

In some embodiments, the network device performs a first transformation on the at least two repeated frequency-domain signal groups to acquire the first signal.

In some embodiments, the network device performs a first transformation on the multiplexed frequency-domain signal to acquire the first signal.

Exemplarily, as illustrated in FIG. 10, the frequency-domain signal x(n) forms a multiplexed frequency-domain signal together with other frequency-domain signals z(n) and GIs. In a case where the first transformation is an IFFT, the first signal is acquired in a time domain by performing IFFT on the multiplexed frequency-domain signal.

In some embodiments, the first signal corresponds to at least two time-domain units. That is, the multiplexed frequency-domain signal undergoes the IFFT and is mapped to at least two time-domain units. In some embodiments, different time-domain units of the at least two time-domain units corresponding to the first signal are respectively associated with different frequency-domain positions, which may also be understood as that the first signal corresponds to at least two time-domain units, and frequency-domain positions mapped by the at least two time-domain units are different. Such a design is beneficial to improve the anti-interference ability of the first signal and enhance the ability to resist frequency-selective fading (that is, anti-fading ability). In addition, the design that the first signal corresponds to at least two frequency-domain unit groups improves the total transmit power and coverage performance of the first signal.

In some embodiments, the first signal is a frequency-hopping signal supporting further improvement of the communication quality of the first signal.

In some embodiments, the time-domain unit includes at least one of: a frame, a subframe, a slot, a mini-slot, a sub-slot, a symbol, a symbol group, or an element based on another time-domain unit.

The symbol includes at least one of: an OFDM symbol, a quadrature phase shift keying (QPSK) symbol, an amplitude shift keying (ASK) symbol, a frequency shift keying (FSK) symbol, an on-off keying (OOK) symbol, or a multi-carrier OOK (MC-OOK) symbol.

In some embodiments, the different frequency-domain positions associated with the at least two time-domain units corresponding to the first signal are adjacent or non-adjacent.

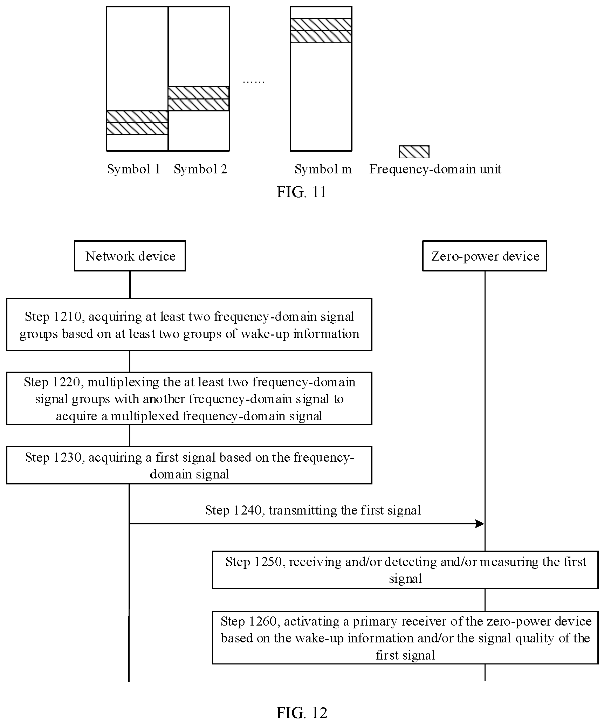

Exemplarily, as illustrated in FIG. 11, in a case where the time-domain unit is a symbol, the first signal corresponds to m symbols. The first signal is mapped to different frequency-domain unit groups on different symbols, and an interval may be present between different frequency-domain unit groups. The interval may be formed by another frequency-domain resource or may be a GI. In addition, the frequency-domain unit groups mapped by the first signal on different time-domain units may be adjacent or non-adjacent. For example, in FIG. 11, the frequency-domain unit groups mapped by the first signal on symbol 1 and symbol 2 are adjacent, and the frequency-domain unit groups mapped by the first signal on symbol 2 and symbol m are non-adjacent.

**In step 950,** the network device transmits the first signal.

In some embodiments, in a case where the wake-up information carried by the first signal is used to wake up a zero-power device, the network device transmits the first signal via unicast.

In some embodiments, in a case where the wake-up information carried by the first signal is used to wake up at least two zero-power devices, the network device transmits the first signal via multicast or broadcast.

In some embodiments, the at least two zero-power devices are located in the same cell, or the at least two zero-power devices are respectively located in different cells.

In some embodiments, the first signal is a cell-level signal, which may also be understood as that the wake-up information carried by the first signal is used to wake up one or more zero-power devices in one cell.

**In step 960,** the zero-power device receives and/or detects and/or measures the first signal.

In some embodiments, the zero-power device receives and/or detects the first signal, and acquires the wake-up information carried by the first signal.

In some embodiments, a frequency-domain resource corresponding to the wake-up information is determined based on at least one second transformation, or a frequency-domain resource corresponding to the wake-up information is determined based on a frequency-domain sequence.

In some embodiments, the zero-power device measures the first signal and acquires signal quality of the first signal.

In some embodiments, the signal quality may be represented by at least one of: a reference signal received power (RSRP) value, a reference signal strength indicator (RSSI) value, a reference signal received quality (RSRQ) value, a signal to interference plus noise ratio (SINR) value, a cross link interference (CLI) value, a channel state information (CSI) value, or the like.

**In step 970,** the zero-power device activates a primary receiver of the zero-power device based on the wake-up information and/or the signal quality of the first signal.

In some embodiments, the wake-up information instructs the zero-power device to receive data and/or signals other than the first signal. Accordingly, the zero-power device activates the primary receiver and uses the primary receiver to receive data and/or the another signals on time-frequency resources indicated by the wake-up information.

In some embodiments, the wake-up information instructs the zero-power device to transmit data and/or signals. Accordingly, the zero-power device activates the primary transmitter and/or a backscatter transmitter, and uses the primary transmitter and/or the backscatter transmitter to transmit data and/or signals on time-frequency resources indicated by the wake-up information.

In some embodiments, in a case where the signal quality of the first signal is lower than a first threshold, the zero-power device activates the primary receiver and uses the primary receiver to receive data and/or signals on time-frequency resources indicated by the wake-up information.

In some embodiments, in a case where the signal quality of the first signal is lower than a first threshold, the zero-power device activates the primary transmitter and/or a backscatter transmitter, and uses the primary transmitter and/or the backscatter transmitter to transmit data and/or signals on time-frequency resources indicated by the wake-up information.

Herein, the first threshold is specified by a communication protocol, configured by the network device, or determined by the zero-power device.

It should be understood that steps 910, 920, 930, 940, and 970 are optional. Each of these steps may be used individually or in combination. For example, steps 910, 920, 930, and 940 may be combined to implement a signal modulation method; step 970 may be implemented individually as an operating method for a zero-power device; steps 950 and 960 may be combined to implement a signal transmission method; or steps 960 and 970 may be combined to implement a signal processing method.

In view of the above, in the method according to the embodiments of the present disclosure, the first signal carries wake-up information and is received by the zero-power device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and reception quality of the wake-up information carried by the first signal.

In addition, different from transmitting a group of wake-up information over a single carrier, in the method according to the embodiments of the present disclosure, a frequency-domain signal group corresponding to a group of wake-up information is repeated serval times in the frequency domain, such that the energy of the first signal is more evenly distributed, and the robustness of the first signal is further improved. Therefore, the method according to the embodiments of the present disclosure helps to improve the robustness, anti-interference ability, and anti-fading ability of the first signal in a case where the first signal only needs to carry one group of wake-up information.

The design and use of the first signal are described hereinafter schematically by using an example where the parameters of the wake-up information associated with different frequency-domain unit groups are different.

FIG. 12 is a schematic flowchart of a wake-up method according to some embodiments of the present disclosure. The method is performed by a zero-power device and a network device, and includes the following steps.

**In step 1210,** the network device acquires at least two frequency-domain signal groups based on at least two groups of wake-up information.

Parameters of different groups of wake-up information are different. A parameter of the wake-up information includes at least one of: an identifier of a zero-power device corresponding to the wake-up information; an index of the zero-power device corresponding to the wake-up information; a channel identifier corresponding to the wake-up information; a channel index corresponding to the wake-up information; or a signal segment corresponding to the wake-up information.

Exemplarily, identifiers of zero-power devices corresponding to different groups of wake-up information are different, which means that different groups of wake-up information are used to wake up different zero-power devices; and/or channel identifiers corresponding to different groups of wake-up information are different, which means that different groups of wake-up information are used to wake up zero-power devices associated with different channels, which may also be understood as that different groups of wake-up information are used to wake up zero-power devices operating on different channels; and/or signal segments corresponding to different groups of wake-up information are different, which means that different groups of wake-up information belong to different signal segments in the first signal.

A group of wake-up information is used to wake up a zero-power device or a plurality of zero-power devices.

In some embodiments, the network device performs at least one second transformation on a group of wake-up information to acquire a frequency-domain signal group. Performing at least one second transformation on a plurality of groups of wake-up information respectively results in a plurality of frequency-domain signal groups.

In some embodiments, a group of wake-up information corresponds to an information bit group, wherein the information bit group includes n bits. At least one second transformation is performed on an information bit group to map a group of wake-up information to n frequency-domain units in a frequency domain, wherein n is an integer greater than or equal to 1.

It should be noted that the number of bits corresponding to the information bit groups corresponding to different groups of wake-up information may be the same or different. That is, values of n corresponding to different groups of wake-up information may be the same or different. Exemplarily, the value of n is one of {1, 2, 4, 6, 8, 12, 16}, or n is another integer greater than 1.

Exemplarily, as illustrated in FIG. 13, the network device acquires three frequency-domain signal groups based on three groups of wake-up information. A first group of wake-up information corresponds to 5 bits, and an information bit group of the first group of wake-up information may be represented by y₁(n). In a case where the second transformation is a DFT transformation, a first frequency-domain signal group x₁(n) in a frequency domain is acquired by performing at least one DFT transformation on y₁(n), wherein x₁(i) corresponds to y₁(i), and i is equal to 0, 1, 2, 3, or 4. A second group of wake-up information corresponds to 5 bits, and an information bit group of the second group of wake-up information may be represented by y₂(n). In a case where the second transformation is a DFT transformation, a second frequency-domain signal group x₂(n) is acquired in the frequency domain by performing at least one DFT transformation on y₂(n), wherein x₂(i) corresponds to y₂(i), and i is equal to 0, 1, 2, 3, or 4. A third group of wake-up information corresponds to 6 bits, and an information bit group of the third group of wake-up information may be represented by y₃(n). In a case where the second transformation is a DFT, a third frequency-domain signal group x₃(n) is acquired in the frequency domain by performing at least one DFT transformation on y₃(n), wherein x₃(i') corresponds to y₃(i'), and i' is equal to 0, 1, 2, 3, 4, or 5.

In some embodiments, a group of wake-up information is represented by a group of frequency-domain sequences. A frequency-domain signal group corresponding to a group of wake-up information includes a group of frequency-domain sequences, which may also be understood as that a frequency-domain signal group corresponding to a group of wake-up information is represented by a group of frequency-domain sequences. In this case, the network device is not required to perform the second transformation in the process of acquiring a frequency-domain signal group based on a group of wake-up information. A plurality of groups of wake-up information are in one-to-one correspondence with a plurality of groups of frequency-domain sequences.

In some embodiments, prior to step 1210, the network device further performs time-domain oversampling on the wake-up information. Exemplarily, a group of original wake-up information, which corresponds to n/4 bits, is oversampled by a factor of 4 by repeating every four consecutive bits to form an information bit group of n bits.

Frequency-domain positions of different frequency-domain signal groups are different. It may also be understood that at least two frequency-domain signal groups respectively correspond to different frequency-domain unit groups, wherein each of the frequency-domain units group includes at least one frequency-domain unit. In some embodiments, the at least two frequency-domain signal groups are adjacent or non-adjacent.

Exemplarily, as illustrated in FIG. 13, at least two frequency-domain signal groups are present in a frequency domain, wherein a frequency-domain unit group corresponding to each of the at least two frequency-domain signal groups includes at least two contiguous frequency-domain units. In a case where the frequency-domain unit is a subcarrier, a subcarrier group corresponding to each of the at least two frequency-domain signal groups includes at least two contiguous subcarriers.

**In step 1220,** the network device multiplexes the at least two frequency-domain signal groups with another frequency-domain signal to acquire a multiplexed frequency-domain signal.

The at least two frequency-domain signal groups x(n) and another frequency-domain signal z(n) form a multiplexed frequency-domain signal; the at least two frequency-domain signal groups x(n) and a GI form a multiplexed frequency-domain signal; or the at least two frequency-domain signal groups x(n), another frequency-domain signal z(n) and a GI form a multiplexed frequency-domain signal.

Exemplarily, as illustrated in FIG. 13, at least two frequency-domain signal groups (including x₁(n), x₂(n), and x₃(n)) are multiplexed with another frequency-domain signal z(n), and a GI is present between the at least two frequency-domain signal groups. Therefore, the at least two frequency-domain signal groups are non-adjacent.

In some embodiments, the another frequency-domain signal z(n) is a signal with OFDM waveforms, such as a cell broadcast signal, a measurement signal, a system message, or the like.

It should be noted that step 1220 is optional. In a case where step 1220 is performed to multiplex the at least two frequency-domain signal groups with another frequency-domain signal, the utilization efficiency of spectrum resources may be improved.

**In step 1230,** the network device acquires a first signal based on the frequency-domain signal.

In some embodiments, the network device performs a first transformation on the at least two frequency-domain signal groups to acquire the first signal.

In some embodiments, the network device performs a first transformation on the multiplexed frequency-domain signal to acquire the first signal.

Exemplarily, as illustrated in FIG. 13, the at least two frequency-domain signal groups (including x₁(n), x₂(n), and x₃(n)) form a multiplexed frequency-domain signal together with other frequency-domain signals z(n) and GIs. In a case where the first transformation is an IFFT transformation, the first signal is acquired in a time domain by performing IFFT transformation on the multiplexed frequency-domain signal.

In some embodiments, the first signal corresponds to at least two time-domain units. That is, the multiplexed frequency-domain signal undergoes the IFFT transformation and is mapped to at least two time-domain units. In some embodiments, different time-domain units corresponding to the first signal are respectively associated with different frequency-domain positions, which may also be understood as that the first signal corresponds to at least two time-domain units, and frequency-domain positions (or frequency-domain unit groups) mapped by the at least two time-domain units are different. Such a design is conducive to improving the anti-interference ability of the first signal and enhancing the ability to resist frequency-selective fading. In addition, the design that the first signal corresponds to at least two frequency-domain unit groups improves the total transmit power and coverage performance of the first signal.

In some embodiments, the first signal is a frequency-hopping signal supporting further improvement of the communication quality of the first signal.

In some embodiments, the time-domain unit includes at least one of: a frame, a subframe, a slot, a mini-slot, a sub-slot, a symbol, a symbol group, or an element based on another time-domain unit.

The symbol includes at least one of: an OFDM symbol, a QPSK symbol, an ASK symbol, an FSK symbol, an OOK symbol, or an MC-OOK symbol.

In some embodiments, the different frequency-domain positions associated with the at least two time-domain units corresponding to the first signal are adjacent or non-adjacent.

Exemplarily, as illustrated in FIG. 14, in a case where the time-domain unit is a slot, the first signal corresponds to m slots. The first signal is mapped to different frequency-domain unit groups on different slots, and an interval may be present between different frequency-domain unit groups. The interval may be formed by another frequency-domain resource or may be a GI. In some embodiments, the frequency-domain unit groups mapped by the first signal on different time-domain units may be adjacent or non-adjacent. In some embodiments, the number of frequency-domain units included in the frequency-domain unit groups mapped by the first signal in different time-domain units may be the same or different. For example, the frequency-domain unit groups mapped by the first signal on slot 1 and slot 2 respectively include two frequency-domain units, and the frequency-domain unit group mapped by the first signal on slot m includes three frequency-domain units

**In step 1240,** the network device transmits the first signal.

In some embodiments, in a case where the wake-up information carried by the first signal is used to wake up at least two zero-power devices, the network device transmits the first signal via multicast or broadcast.

In some embodiments, the at least two zero-power devices are located in the same cell, or the at least two zero-power devices are respectively located in different cells.

In some embodiments, the first signal is a cell-level signal, which may also be understood as that the wake-up information carried by the first signal is used to wake up one or more zero-power devices in one cell.

In some embodiments, the wake-up information is cell-level, which may also be understood as that a group of wake-up information is used to wake up one or more zero-power devices in one cell. Different groups of wake-up information are used to wake up one or more zero-power devices in different cells.

**In step 1250,** the zero-power device receives and/or detects and/or measures the first signal.

In some embodiments, the zero-power device receives and/or detects the first signal, and acquires the wake-up information carried by the first signal.

In some embodiments, a frequency-domain resource corresponding to the wake-up information is determined based on at least one second transformation, or a frequency-domain resource corresponding to the wake-up information is determined based on a frequency-domain sequence.

In some embodiments, the zero-power device measures the first signal and acquires signal quality of the first signal.

In some embodiments, the signal quality may be represented by at least one of: an RSRP value, an RSSI value, an RSRQ value, an SINR value, a CLI value, a CSI value, or the like.

**In step 1260,** the zero-power device activates a primary receiver of the zero-power device based on the wake-up information and/or the signal quality of the first signal.

In some embodiments, the wake-up information instructs the zero-power device to receive data and/or signals other than the first signal. Accordingly, the zero-power device activates the primary receiver and uses the primary receiver to receive data and/or the other signals on time-frequency resources indicated by the wake-up information.

In some embodiments, the wake-up information instructs the zero-power device to transmit data and/or signals. Accordingly, the zero-power device activates the primary transmitter and/or a backscatter transmitter, and uses the primary transmitter and/or the backscatter transmitter to transmit data and/or signals on time-frequency resources indicated by the wake-up information.

It should be understood that steps 1210, 1220, 1230, and 1260 are optional. Each of these steps may be used individually or in combination. For example, steps 1210, 1220, and 1230 may be combined to implement a signal modulation method; step 1260 may be implemented individually as an operating method for a zero-power device; steps 1250 and 1260 may be combined to implement a signal transmission method; or steps 1250 and 1260 may be combined to implement a signal processing method.

In view of the above, in the method according to the embodiments of the present disclosure, the first signal carries wake-up information and is received by the zero-power device via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and reception quality of the wake-up information carried by the first signal.

In addition, different from transmitting a group of wake-up information over a single carrier, in the method according to the embodiments of the present disclosure, a plurality of frequency-domain signal groups corresponding to a plurality of groups of wake-up information are distributed adjacently or non-adjacently in the frequency domain, which avoids excessive concentration of energy of the first signal and further improves the robustness of the first signal. Therefore, in the method according to the embodiments of the present disclosure, a plurality of groups of wake-up information are carried by one signal in a case where the plurality of groups of wake-up information are required to be transmitted, which does not only improve the utilization rate of transmission resources and communication efficiency, but also enhance the robustness, anti-interference ability, and anti-fading ability of the first signal.

FIG. 15 is a structural block diagram of a wake-up apparatus according to some embodiments of the present disclosure. The apparatus may be implemented as a network device or a part of a network device via software, hardware, or a combination of software and hardware. The apparatus includes at least some of a first transmitting module 1510, a first processing module 1530, and a first receiving module 1550.

The first transmitting module 1510 is configured to transmit a first signal, wherein the first signal carries wake-up information for waking up at least one zero-power device; wherein a frequency-domain resource corresponding to the wake-up information includes at least two frequency-domain unit groups, wherein each of the at least two frequency-domain unit groups includes at least one frequency-domain unit.

In some embodiments, parameters of the wake-up information associated with different frequency-domain unit groups of the at least two frequency-domain unit groups are the same; or parameters of the wake-up information associated with different frequency-domain unit groups of the at least two frequency-domain unit groups are different.

In some embodiments, the parameters of the wake-up information include at least one of: an identifier of a zero-power device corresponding to the wake-up information; an index of a zero-power device corresponding to the wake-up information; a channel identifier corresponding to the wake-up information; a channel index corresponding to the wake-up information; or a signal segment corresponding to the wake-up information.

In some embodiments, the first signal includes a time-domain signal generated by performing a first transformation on a frequency-domain signal; wherein the first transformation is a transformation of a signal from a frequency domain to a time domain.

In some embodiments, the first transformation includes one of: an IFT, an IFFT, an inverse Laplace transform, or an inverse z-transform.

In some embodiments, the frequency-domain signal includes at least two frequency-domain signal groups corresponding to the at least two frequency-domain unit groups; or the frequency-domain signal includes a multiplexed signal of the at least two frequency-domain signal groups and another frequency-domain signal; wherein the another frequency-domain signal is a frequency-domain signal other than the at least two frequency-domain signal groups.

In some embodiments, the at least two frequency-domain unit groups are in one-to-one correspondence with the at least two frequency-domain signal groups; and
an i^{th} frequency-domain signal group of the at least two frequency-domain signal groups is generated by performing at least one second transformation on wake-up information corresponding to an i^{th} frequency-domain unit group of the at least two frequency-domain unit groups;
wherein the second transformation is a transformation of a signal from the time domain to the frequency domain.

In some embodiments, the second transformation includes one of: an FT, an FFT, a DFT, a Laplace transform, or a z-transform.

In some embodiments, the at least two frequency-domain unit groups are in one-to-one correspondence with the at least two frequency-domain signal groups; and
an i^{th} frequency-domain signal group of the at least two frequency-domain signal groups includes a frequency-domain sequence determined based on wake-up information corresponding to an i^{th} frequency-domain unit group of the at least two frequency-domain unit groups.

In some embodiments, the at least two frequency-domain unit groups respectively include different frequency-domain units, and the at least two frequency-domain unit groups are adjacent or non-adjacent.

In some embodiments, each of the at least two frequency-domain unit groups includes: a frequency-domain unit, a plurality of contiguous frequency-domain units, or a plurality of non-contiguous frequency-domain units.

In some embodiments, the at least one zero-power device is located in the same cell or different cells.

In some embodiments, the apparatus further includes the first processing module 1530 configured to generate/modulate the first signal. In an example, the first processing module 1530 is configured to perform at least one of steps 910, 920, 930, and 940. In another example, the first processing module 1530 is configured to perform at least one of steps 1210, 1220, and 1230.

In some embodiments, the apparatus further includes the first receiving module 1550 configured to receive signals or data from the zero-power device. For example, the first receiving module 1550 is configured to receive a synchronization request from the zero-power device. For example, the first receiving module 1550 is configured to receive backscatter signals from the zero-power device. For example, the first receiving module 1550 is configured to receive signals or data from the primary transmitter of the zero-power device.

In view of the above, in the apparatus according to the embodiment of the present disclosure, the first signal carries wake-up information and is transmitted by the apparatus via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and the reception quality of the wake-up information carried by the first signal. In addition, a transformation method for the first signal is designed. By separately processing the wake-up information corresponding to each of the at least two frequency-domain unit groups, such as separately performing the second transformation or separately generating the frequency-domain sequence for the wake-up information corresponding to each of the at last two frequency-domain unit groups, the energy of the finally transmitted first signal is further evenly distributed, and the robustness of the first signal is further improved.

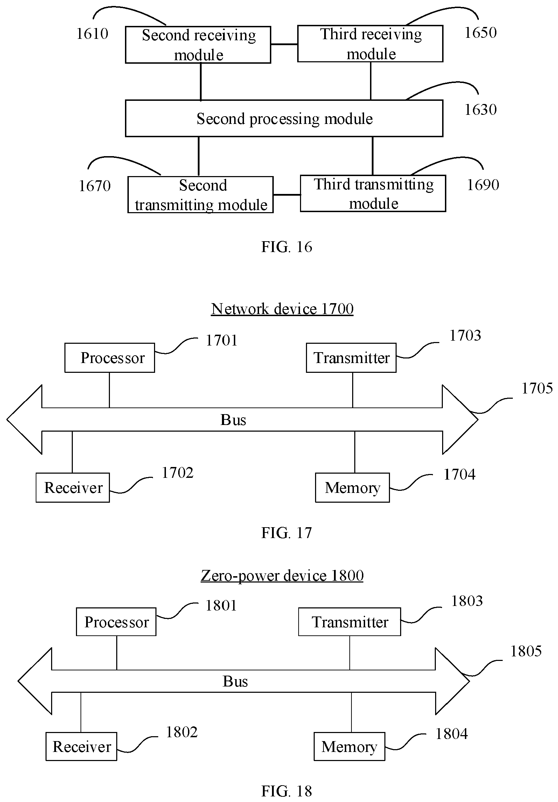

FIG. 16 is a block diagram of a wake-up apparatus according to some embodiments of the present disclosure. The apparatus may be implemented as a zero-power device or a part of a zero-power device via software, hardware, or a combination of software and hardware. The apparatus includes a second receiving module 1610, a second processing module 1630, a third receiving module 1650, a second transmitting module 1670, and a third transmitting module 1690.

The second receiving module 1610 is configured to receive a first signal, wherein the first signal carries wake-up information for waking up at least one zero-power device; wherein a frequency-domain resource corresponding to the wake-up information includes at least two frequency-domain unit groups, wherein each of the at least two frequency-domain unit groups includes at least one frequency-domain unit.

In some embodiments, parameters of the wake-up information associated with different frequency-domain unit groups are the same; or parameters of the wake-up information associated with different frequency-domain unit groups are different.

In some embodiments, the parameters of the wake-up information include at least one of: an identifier of a zero-power device corresponding to the wake-up information; an index of a zero-power device corresponding to the wake-up information; a channel identifier corresponding to the wake-up information; a channel index corresponding to the wake-up information; or a signal segment corresponding to the wake-up information.

In some embodiments, the frequency-domain resource corresponding to the wake-up information is determined based on at least one second transformation, wherein the second transformation is a transformation of a signal from a time domain to a frequency domain; or the frequency-domain resource corresponding to the wake-up information is determined based on a frequency-domain sequence.

In some embodiments, the second transformation includes one of: an FT, an FFT, a DFT, a Laplace transform, or a z-transform.

In some embodiments, the first signal includes a time-domain signal generated by performing a first transformation on a frequency-domain signal; wherein the first transformation is a transformation of a signal from a frequency domain to a time domain.

In some embodiments, the first transformation includes one of: an IFT, an IFFT, an inverse Laplace transform, or an inverse z-transform.

In some embodiments, the frequency-domain signal includes at least two frequency-domain signal groups corresponding to the at least two frequency-domain unit groups; or the frequency-domain signal includes a multiplexed signal of the at least two frequency-domain signal groups and another frequency-domain signal;
wherein the another frequency-domain signal is a frequency-domain signal other than the at least two frequency-domain signal groups.

In some embodiments, the at least two frequency-domain unit groups respectively include different frequency-domain units, and the at least two frequency-domain unit groups are adjacent or non-adjacent.

In some embodiments, each of the at least two frequency-domain unit groups includes: a frequency-domain unit, a plurality of contiguous frequency-domain units, or a plurality of non-contiguous frequency-domain units.

In some embodiments, the at least one zero-power device is located in the same cell or different cells.

In some embodiments, the apparatus further includes the second processing module 1630 and the third receiving module 1650. The second processing module 1630 is configured to activate the third receiving module 1650 based on the wake-up information and/or signal quality of the first signal.

In some embodiments, the second processing module 1630 is further configured to: detect the first signal and acquire the wake-up information; and/or measure the first signal and acquire the signal quality of the first signal. In an example, the second processing module 1630 is configured to perform step 960 and/or step 970. In another example, the second processing module 1630 is configured to perform step 1250 and/or step 1260.

In some embodiments, the wake-up information includes time-domain resource information and/or frequency-domain resource information.

In some embodiments, the apparatus further includes the third receiving module 1650 configured to receive data and/or a signal based on the time-domain resource information and/or the frequency-domain resource information.

In some embodiments, the apparatus further includes the second transmitting module 1670 configured to transmit data and/or a signal based on the time-domain resource information and/or the frequency-domain resource information.

In some embodiments, the apparatus further includes the third transmitting module 1690 configured to perform backscattering based on the time-domain resource information and/or the frequency-domain resource information.

In view of the above, in the apparatus according to the embodiments of the present disclosure, the first signal carries wake-up information and is received by the apparatus via at least two frequency-domain unit groups. The first signal carrying the wake-up information is evenly distributed in the frequency domain, which avoids high peak power and interference caused by the excessive concentration of energy of the first signal, helps to improve the robustness of the first signal, and is conducive to enhancing the transmission quality and reception quality of the wake-up information carried by the first signal. In addition, the frequency-domain resources corresponding to the wake-up information are determined separately, which further achieves even distribution of the energy of the first signal and further improves the robustness of the first signal.

FIG. 17 is a schematic structural diagram of a network device 1700 according to some embodiments of the present disclosure. The network device 1700 includes a processor 1701, a receiver 1702, a transmitter 1703, a memory 1704, and a bus 1705.

The processor 1701 includes one or more processing cores, and the processor 1701 executes various functional applications and performs information processing by running software programs and modules.

The receiver 1702 and the transmitter 1703 may be implemented as a communication assembly, which may be a communication chip. The communication assembly may be referred to as a transceiver. In some embodiments, the receiver 1702 may be configured to implement the functions and steps of the first receiving module 1550, and the transmitter 1703 may be configured to implement the functions and steps of the first transmitting module 1510.

The memory 1704 is communicably connected to the processor 1701 via the bus 1705.

The memory 1704 is configured to store at least one instruction, and the processor 1701 is configured to execute the at least one instruction to perform the steps in the above method embodiments. The processor 1701 may be configured to implement the functions and steps of the first processing module 1530.

In addition, the memory 1704 may be implemented by any type of a volatile or non-volatile storage device or a combination thereof. The volatile or non-volatile storage device includes, but not limited to: a magnetic or optical disk, an electrically-erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 1702 independently receives signals/data, or the processor 1701 controls the receiver 1702 to receive signals/data, or the processor 1701 requests the receiver 1702 to receive signals/data, or the processor 1701 cooperates with the receiver 1702 to receive signals/data.

In some embodiments, the transmitter 1703 independently transmits signals/data, or the processor 1701 controls the transmitter 1703 to transmit signals/data, or the processor 1701 requests the transmitter 1703 to transmit signals/data, or the processor 1701 cooperates with the transmitter 1703 to transmit signals/data.

FIG. 18 is a schematic structural diagram of a zero-power device 1800 according to some embodiments of the present disclosure, including a processor 1801, a receiver 1802, a transmitter 1803, a memory 1804, and a bus 1805.

The processor 1801 includes one or more processing cores, and the processor 1801 executes various functional applications and performs information processing by running software programs and modules.

The receiver 1802 and the transmitter 1803 may be implemented as a communication assembly, which may be a communication chip. The communication assembly may be referred to as a transceiver. In some embodiments, the receiver 1802 may be configured to implement the functions and steps of the second receiving module 1610 and/or the third receiving module 1650, and the transmitter 1803 may be configured to implement the functions and steps of the second transmitting module 1670 and/or third transmitting module 1690.

The memory 1804 is communicably connected to the processor 1801 via the bus 1805.

The memory 1804 is configured to store at least one instruction, and the processor 1801 is configured to execute the at least one instruction to perform the steps in the above method embodiments. The processor 1801 may be configured to implement the functions and steps of the second processing module 1630.

In addition, the memory 1804 may be implemented by any type of a volatile or non-volatile storage device or a combination thereof. The volatile or non-volatile storage device includes, but not limited to: a magnetic disk, an optical disk, an EEPROM, an EPROM, an SRAM, a ROM, a magnetic memory, a flash memory, and a PROM.

In some embodiments, the receiver 1802 independently receives signals/data, or the processor 1801 controls the receiver 1802 to receive signals/data, or the processor 1801 requests the receiver 1802 to receive signals/data, or the processor 1801 cooperates with the receiver 1802 to receive signals/data.

In some embodiments, the transmitter 1803 independently transmits signals/data, or the processor 1801 controls the transmitter 1803 to transmit signals/data, or the processor 1801 requests the transmitter 1803 to transmit signals/data, or the processor 1801 cooperates with the transmitter 1803 to transmit signals/data.

In some embodiments, the receiver 1802 is implemented as a WUR, or the receiver 1802 is implemented as a primary receiver, or the receiver 1802 is implemented as a combined receiver of a WUR and a primary receiver.

In some embodiments, the transmitter 1803 is implemented as a primary transmitter, or the transmitter 1803 is implemented as a backscatter transmitter, or the transmitter 1803 is implemented as a primary transmitter and a backscatter transmitter.

In some embodiments, the processor 1801 and the receiver 1802 may be implemented as a single module, or the processor 1801 may be implemented as a part of the receiver 1802.

In some embodiments, the processor 1801 and the transmitter 1803 may be implemented as a single module, or the processor 1801 may be implemented as a part of the transmitter 1803.

In some embodiments, the zero-power device 1800 includes one or more processors 1801.

In some embodiments, the zero-power device 1800 includes one or more receivers 1802.

In some embodiments, the zero-power device 1800 includes one or more transmitters 1803.

In some embodiments of the present disclosure, a computer-readable storage medium is further provided. The computer-readable storage medium stores at least one program. The at least one program, when loaded and run by the processor, causes the processor to perform the wake-up method according to each of the above method embodiments.

In some exemplary embodiments of the present disclosure, a chip is further provided. The chip includes programmable logic circuitry and/or one or more program instructions. The chip, when running the programmable logic circuitry and/or the one or more program instructions on a communication device, is configured to perform the wake-up method according to each of the above method embodiments.

In some embodiments of the present disclosure, a computer program product is further provided. The computer program product, when running on a processor of a computer device, causes the computer device to perform the above wake-up method.

In some embodiments of the present disclosure, a computer program is further provided. The computer program includes one or more computer instructions. The one or more computer instructions, when executed by a processor of a computer device, cause the computer device to perform the above wake-up method.

A person of ordinary skill in the art may be aware that all or part of the steps for implementing the above embodiments may be completed by hardware, or by a program instructing relevant hardware. The program may be stored in a computer-readable storage medium. The storage medium may be a ROM, a magnetic disk, an optical disk, or the like.

Described above are merely optional embodiments of the present disclosure and are not intended to limit the present disclosure. Any modifications, equivalent substitutions, improvements, or the like, made within the spirit and principle of the present disclosure shall fall within the protection scope of the present disclosure.

## Claims

1. A wake-up method, performed by a network device, the method comprising:
transmitting a first signal, wherein the first signal carries wake-up information for waking up at least one zero-power device;
wherein a frequency-domain resource corresponding to the wake-up information comprises at least two frequency-domain unit groups, each of the at least two frequency-domain unit groups comprising at least one frequency-domain unit.

2. The method according to claim 1, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

3. The method according to claim 2, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

4. The method according to any one of claims 1 to 3, wherein
the first signal comprises a time-domain signal generated by performing a first transformation on a frequency-domain signal;
wherein the first transformation is a transformation of a signal from a frequency domain to a time domain.

5. The method according to claim 4, wherein the first transformation comprises one of:
an inverse Fourier transform, IFT;
an inverse fast Fourier transform, IFFT;
an inverse Laplace transform; or
an inverse z-transform.

6. The method according to claim 4 or 5, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

7. The method according to claim 6, wherein
the at least two frequency-domain unit groups are in one-to-one correspondence with the at least two frequency-domain signal groups; and
an i^{th} frequency-domain signal group of the at least two frequency-domain signal groups is generated by performing at least one second transformation on wake-up information corresponding to an i^{th} frequency-domain unit group of the at least two frequency-domain unit groups;
wherein the second transformation is a transformation of a signal from the time domain to the frequency domain.

8. The method according to claim 7, wherein the second transformation comprises one of:
a Fourier transform, FT;
a fast FT, FFT;
a discrete FT, DFT;
a Laplace transform; or
a z-transform.

9. The method according to claim 6, wherein
the at least two frequency-domain unit groups are in one-to-one correspondence with the at least two frequency-domain signal groups; and
an i^{th} frequency-domain signal group of the at least two frequency-domain signal groups comprises a frequency-domain sequence determined based on wake-up information corresponding to an i^{th} frequency-domain unit group of the at least two frequency-domain unit groups.

10. The method according to any one of claims 1 to 9, wherein
the at least two frequency-domain unit groups respectively comprise different frequency-domain units, and the at least two frequency-domain unit groups are adjacent or non-adjacent.

11. The method according to any one of claims 1 to 10, wherein each of the at least two frequency-domain unit groups comprises:
a frequency-domain unit;
a plurality of contiguous frequency-domain units; or
a plurality of non-contiguous frequency-domain units.

12. The method according to any one of claims 1 to 11, wherein the at least one zero-power device is located in the same cell or different cells.

13. A wake-up method, performed by a zero-power device, the method comprising:
receiving a first signal, wherein the first signal carries wake-up information for waking up at least one zero-power device;
wherein a frequency-domain resource corresponding to the wake-up information comprises at least two frequency-domain unit groups, each of the at least two frequency-domain unit groups comprising at least one frequency-domain unit.

14. The method according to claim 13, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

15. The method according to claim 14, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

16. The method according to any one of claims 13 to 15, wherein
the frequency-domain resource corresponding to the wake-up information is determined based on at least one second transformation, wherein the second transformation is a transformation of a signal from a time domain to a frequency domain; or
the frequency-domain resource corresponding to the wake-up information is determined based on a frequency-domain sequence.

17. The method according to claim 16, wherein the second transformation comprises one of:
a Fourier transform, FT;
a fast FT, FFT;
a discrete FT, DFT;
a Laplace transform; or
a z-transform.

18. The method according to any one of claims 13 to 17, wherein
the first signal comprises a time-domain signal generated by performing a first transformation on a frequency-domain signal;
wherein the first transformation is a transformation of a signal from a frequency domain to a time domain.

19. The method according to claim 18, wherein the first transformation comprises one of:
an inverse Fourier transform, IFT;
an inverse fast Fourier transform, IFFT;
an inverse Laplace transform; or
an inverse z-transform.

20. The method according to claim 18 or 19, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

21. The method according to any one of claims 13 to 20, wherein
the at least two frequency-domain unit groups respectively comprise different frequency-domain units, and the at least two frequency-domain unit groups are adjacent or non-adjacent.

22. The method according to any one of claims 13 to 21, wherein each of the at least two frequency-domain unit groups comprises:
a frequency-domain unit;
a plurality of contiguous frequency-domain units; or
a plurality of non-contiguous frequency-domain units.

23. The method according to any one of claims 13 to 22, wherein the at least one zero-power device is located in the same cell or different cells.

24. The method according to any one of claims 13 to 23, further comprising:
activating a primary receiver of the zero-power device based on at least one of the wake-up information or signal quality of the first signal.

25. The method according to claim 24, wherein prior to activating the primary receiver of the zero-power device, the method further comprises at least one of:
detecting the first signal and acquiring the wake-up information; or
measuring the first signal and acquiring the signal quality of the first signal.

26. The method according to claim 24 or 25, wherein
the wake-up information comprises at least one of time-domain resource information or frequency-domain resource information; and
the method further comprises at least one of:
receiving data via the primary receiver based on at least one of the time-domain resource information or the frequency-domain resource information;
transmitting data via a primary transmitter of the zero-power device based on at least one of the time-domain resource information or the frequency-domain resource information; or
transmitting data via a backscatter transmitter of the zero-power device based on at least one of the time-domain resource information or the frequency-domain resource information.

27. A wake-up apparatus, comprising:
a first transmitting module, configured to transmit a first signal, wherein the first signal carries wake-up information for waking up at least one zero-power device;
wherein a frequency-domain resource corresponding to the wake-up information comprises at least two frequency-domain unit groups, each of the at least two frequency-domain unit groups comprising at least one frequency-domain unit.

28. The apparatus according to claim 27, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

29. The apparatus according to claim 28, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

30. The apparatus according to any one of claims 27 to 29, wherein
the first signal comprises a time-domain signal generated by performing a first transformation on a frequency-domain signal;
wherein the first transformation is a transformation of a signal from a frequency domain to a time domain.

31. The apparatus according to claim 30, wherein the first transformation comprises one of:
an inverse Fourier transform, IFT;
an inverse fast Fourier transform, IFFT;
an inverse Laplace transform; or
an inverse z-transform.

32. The apparatus according to claim 30 or 31, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

33. The apparatus according to claim 32, wherein
the at least two frequency-domain unit groups are in one-to-one correspondence with the at least two frequency-domain signal groups; and
an i^{th} frequency-domain signal group of the at least two frequency-domain signal groups is generated by performing at least one second transformation on wake-up information corresponding to an i^{th} frequency-domain unit group of the at least two frequency-domain unit groups;
wherein the second transformation is a transformation of a signal from the time domain to the frequency domain.

34. The apparatus according to claim 33, wherein the second transformation comprises one of:
a Fourier transform, FT;
a fast FT, FFT;
a discrete FT, DFT;
a Laplace transform; or
a z-transform.

35. The apparatus according to claim 32, wherein
the at least two frequency-domain unit groups are in one-to-one correspondence with the at least two frequency-domain signal groups; and
an i^{th} frequency-domain signal group of the at least two frequency-domain signal groups comprises a frequency-domain sequence determined based on wake-up information corresponding to an i^{th} frequency-domain unit group of the at least two frequency-domain unit groups.

36. The apparatus according to any one of claims 27 to 35, wherein
the at least two frequency-domain unit groups respectively comprise different frequency-domain units, and the at least two frequency-domain unit groups are adjacent or non-adjacent.

37. The apparatus according to any one of claims 27 to 36, wherein each of the at least two frequency-domain unit groups comprises:
a frequency-domain unit;
a plurality of contiguous frequency-domain units; or
a plurality of non-contiguous frequency-domain units.

38. The apparatus according to any one of claims 27 to 37, wherein the at least one zero-power device is located in the same cell or different cells.

39. A wake-up apparatus, comprising:
a second receiving module, configured to receive a first signal, wherein the first signal carries wake-up information for waking up at least one zero-power device;
wherein a frequency-domain resource corresponding to the wake-up information comprises at least two frequency-domain unit groups, each of the at least two frequency-domain unit groups comprising at least one frequency-domain unit.

40. The apparatus according to claim 39, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

41. The apparatus according to claim 40, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

42. The apparatus according to any one of claims 39 to 41, wherein
the frequency-domain resource corresponding to the wake-up information is determined based on at least one second transformation, wherein the second transformation is a transformation of a signal from a time domain to a frequency domain; or
the frequency-domain resource corresponding to the wake-up information is determined based on a frequency-domain sequence.

43. The apparatus according to claim 42, wherein the second transformation comprises one of:
a Fourier transform, FT;
a fast FT, FFT;
a discrete FT, DFT;
a Laplace transform; or
a z-transform.

44. The apparatus according to any one of claims 39 to 43, wherein
the first signal comprises a time-domain signal generated by performing a first transformation on a frequency-domain signal;
wherein the first transformation is a transformation of a signal from a frequency domain to a time domain.

45. The apparatus according to claim 44, wherein the first transformation comprises one of:
an inverse Fourier transform, IFT;
an inverse fast Fourier transform, IFFT;
an inverse Laplace transform; or
an inverse z-transform.

46. The apparatus according to claim 44 or 45, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

47. The apparatus according to any one of claims 39 to 46, wherein
the at least two frequency-domain unit groups respectively comprise different frequency-domain units, and the at least two frequency-domain unit groups are adjacent or non-adjacent.

48. The apparatus according to any one of claims 39 to 47, wherein each of the at least two frequency-domain unit groups comprises
a frequency-domain unit;
a plurality of contiguous frequency-domain units; or
a plurality of non-contiguous frequency-domain units.

49. The apparatus according to any one of claims 39 to 48, wherein the at least one zero-power device is located in the same cell or different cells.

50. The apparatus according to any one of claims 39 to 49, further comprising:
a second processing module; and
a third receiving module;
wherein the second processing module is configured to activate the third receiving module based on at least one of the wake-up information or signal quality of the first signal.

51. The apparatus according to claim 50, wherein the second processing module is further configured to:
detect the first signal and acquire the wake-up information; and/or
measure the first signal and acquire the signal quality of the first signal.

52. The apparatus according to claim 50 or 51, wherein the wake-up information comprises at least one of time-domain resource information or frequency-domain resource information;
the apparatus further comprises at least one of:
the third receiving module, configured to receive at least one of data or a signal based on at least one of the time-domain resource information or the frequency-domain resource information;
a second transmitting module, configured to transmit at least one of data or a signal based on at least one of the time-domain resource information or the frequency-domain resource information; or
a third transmitting module, configured to perform backscattering based on at least one of the time-domain resource information or the frequency-domain resource information.

53. A network device, comprising:
a processor;
a transmitter communicably connected to the processor; and
a memory, configured to store one or more instructions executable by the processor;
wherein the transmitter is configured to transmit a first signal, wherein the first signal carries wake-up information for waking up at least one zero-power device; wherein a frequency-domain resource corresponding to the wake-up information comprises at least two frequency-domain unit groups, each of the at least two frequency-domain unit groups comprising at least one frequency-domain unit.

54. The network device according to claim 53, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

55. The network device according to claim 54, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

56. The network device according to any one of claims 53 to 55, wherein
the first signal comprises a time-domain signal generated by performing a first transformation on a frequency-domain signal;
wherein the first transformation is a transformation of a signal from a frequency domain to a time domain.

57. The network device according to claim 56, wherein the first transformation comprises one of:
an inverse Fourier transform, IFT;
an inverse fast Fourier transform, IFFT;
an inverse Laplace transform; or
an inverse z-transform.

58. The network device according to claim 56 or 57, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

59. The network device according to claim 58, wherein
the at least two frequency-domain unit groups are in one-to-one correspondence with the at least two frequency-domain signal groups; and
an i^{th} frequency-domain signal group of the at least two frequency-domain signal groups is generated by performing at least one second transformation on wake-up information corresponding to an i^{th} frequency-domain unit group of the at least two frequency-domain unit groups;
wherein the second transformation is a transformation of a signal from the time domain to the frequency domain.

60. The network device according to claim 59, wherein the second transformation comprises one of:
a Fourier transform, FT;
a fast FT, FFT;
a discrete FT, DFT;
a Laplace transform; or
a z-transform.

61. The network device according to claim 58, wherein
the at least two frequency-domain unit groups are in one-to-one correspondence with the at least two frequency-domain signal groups; and
an i^{th} frequency-domain signal group of the at least two frequency-domain signal groups comprises a frequency-domain sequence determined based on wake-up information corresponding to an i^{th} frequency-domain unit group of the at least two frequency-domain unit groups.

62. The network device according to any one of claims 53 to 61, wherein
the at least two frequency-domain unit groups respectively comprise different frequency-domain units, and the at least two frequency-domain unit groups are adjacent or non-adjacent.

63. The network device according to any one of claims 53 to 62, wherein each of the at least two frequency-domain unit groups comprises:
a frequency-domain unit;
a plurality of contiguous frequency-domain units; or
a plurality of non-contiguous frequency-domain units.

64. The network device according to any one of claims 53 to 63, wherein the at least one zero-power device is located in the same cell or different cells.

65. A zero-power device, comprising
a first receiver configured to receive a first signal, wherein the first signal carries wake-up information for waking up at least one zero-power device;
wherein a frequency-domain resource corresponding to the wake-up information comprises at least two frequency-domain unit groups, each of the at least two frequency-domain unit groups comprising at least one frequency-domain unit.

66. The zero-power device according to claim 65, wherein
parameters of the wake-up information associated with different frequency-domain unit groups of the at least two frequency-domain unit groups are the same; or
parameters of the wake-up information associated with different frequency-domain unit groups of the at least two frequency-domain unit groups are different.

67. The zero-power device according to claim 66, wherein the parameters of the wake-up information comprise at least one of:
an identifier of a zero-power device corresponding to the wake-up information;
an index of a zero-power device corresponding to the wake-up information;
a channel identifier corresponding to the wake-up information;
a channel index corresponding to the wake-up information; or
a signal segment corresponding to the wake-up information.

68. The zero-power device according to any one of claims 65 to 67, wherein
the frequency-domain resource corresponding to the wake-up information is determined based on at least one second transformation, wherein the second transformation is a transformation of a signal from a time domain to a frequency domain; or
the frequency-domain resource corresponding to the wake-up information is determined based on a frequency-domain sequence.

69. The zero-power device according to claim 68, wherein the second transformation comprises one of:
a Fourier transform, FT;
a fast FT, FFT;
a discrete FT, DFT;
a Laplace transform; or
a z-transform.

70. The zero-power device according to any one of claims 65 to 69, wherein
the first signal comprises a time-domain signal generated by performing a first transformation on a frequency-domain signal;
wherein the first transformation is a transformation of a signal from a frequency domain to a time domain.

71. The zero-power device according to claim 70, wherein the first transformation comprises one of:
an inverse Fourier transform, IFT;
an inverse fast Fourier transform, IFFT;
an inverse Laplace transform; or
an inverse z-transform.

72. The zero-power device according to claim 70 or 71, wherein
the frequency-domain signal comprises at least two frequency-domain signal groups corresponding to the at least two frequency-domain unit groups; or
the frequency-domain signal comprises a multiplexed signal of the at least two frequency-domain signal groups and another frequency-domain signal;
wherein the another frequency-domain signal is a frequency-domain signal other than the at least two frequency-domain signal groups.

73. The zero-power device according to any one of claims 65 to 72, wherein
the at least two frequency-domain unit groups respectively comprise different frequency-domain units, and the at least two frequency-domain unit groups are adjacent or non-adjacent.

74. The zero-power device according to any one of claims 65 to 73, wherein each of the at least two frequency-domain unit groups comprises
a frequency-domain unit;
a plurality of contiguous frequency-domain units; or
a plurality of non-contiguous frequency-domain units.

75. The zero-power device according to any one of claims 65 to 74, wherein the at least one zero-power device is located in the same cell or different cells.

76. The zero-power device according to any one of claims 65 to 75, further comprising:
a processor; and
a second receiver;
wherein the processor is configured to activate the second receiver based on at least one of the wake-up information or signal quality of the first signal.

77. The zero-power device according to claim 76, wherein the processor is further configured to:
detect the first signal and acquire the wake-up information; and/or
measure the first signal and acquire the signal quality of the first signal.

78. The zero-power device according to claim 76 or 77, wherein the wake-up information comprises at least one of time-domain resource information or frequency-domain resource information;
the second receiver is configured to receive at least one of data or a signal based on at least one of the time-domain resource information or the frequency-domain resource information; and/or
the zero-power device further comprises a first transmitter configured to transmit at least one of data or a signal based on at least one of the time-domain resource information or the frequency-domain resource information; and/or
the zero-power device further comprises a second transmitter configured to perform backscattering based on at least one of the time-domain resource information or the frequency-domain resource information.

79. A computer-readable storage medium, storing one or more executable instructions, wherein the one or more executable instructions, when loaded and executed by a processor, cause the processor to perform the wake-up method as defined in any one of claims 1 to 12 or 13 to 26.

80. A chip, comprising programmable logic circuitry or one or more programs, wherein the chip is configured to perform the wake-up method as defined in any one of claims 1 to 12 or 13 to 26.

81. A computer program product, comprising one or more computer instructions stored in a computer-readable storage medium,
wherein the one or more computer instructions, when read by a processor of a computer device from the computer-readable storage medium and executed by the processor, cause the computer device to perform the wake-up method as defined in any one of claims 1 to 12 or 13 to 26.

82. A computer program, comprising one or more computer instructions, wherein the one or more computer instructions, when executed by a processor of a computer device, cause the computer device to perform the wake-up method as defined in any one of claims 1 to 12 or 13 to 26.
